# EUROPÄISCHE PATENTSCHRIFT

(11) **EP 3 141 426 B1**
(45) Veröffentlichungstag und Bekanntmachung des Hinweises auf die Patenterteilung: **05.12.2018**
(21) Anmeldenummer: 16001591.3
(22) Anmeldetag: 19.07.2016
(51) Int. Cl.: B60Q 1/18

(54) **VORRICHTUNG UND VERFAHREN ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A UTILITY VEHICLE
PROCÉDÉ ET DISPOSITIF D'ASSISTANCE À UN CONDUCTEUR D'UN VÉHICULE AUTOMOBILE, EN PARTICULIER UN VÉHICULE UTILITAIRE

(30) Priorität: 24.07.2015 DE 102015009537
(43) Veröffentlichungstag der Anmeldung: 15.03.2017
(73) Patentinhaber: MAN Truck & Bus AG, 80995 München (DE)
(72) Erfinder: Vidi, Juliano, 82256 Fürstenfeldbruck (DE)
(74) Vertreter: Liebl, Thomas

(56) Entgegenhaltungen:
- US-A1- 2014 052 335

## Beschreibung

Die Erfindung betrifft eine Vorrichtung zur Unterstützung eines Fahrers eines Fahrzeugs, insbesondere eines Nutzfahrzeugs, nach dem Oberbegriff des Patentanspruches 1, ein Verfahren zur Unterstützung eines Fahrers eines Fahrzeugs, insbesondere eines Nutzfahrzeugs, nach dem Oberbegriff des Patentanspruches 13 sowie ein Fahrzeug, insbesondere ein Nutzfahrzeug, mit der Vorrichtung und/oder zur Durchführung des Verfahrens nach Patentanspruch 14.

Es sind Fahrzeuge bekannt, an denen ein Anbauelement, beispielsweise eine Schneeräumeinrichtung, ein Frontlader oder eine Kehreinrichtung, lösbar festgelegt werden kann. Derartige Fahrzeuge können beispielsweise als Lastkraftwagen, als Traktoren oder aber auch als Personenkraftwagen ausgebildet sein. Häufig werden diese Fahrzeuge zudem als Kommunalfahrzeuge verwendet.

Weiter wird durch das an dem Fahrzeug festgelegte Anbauelement regelmäßig eine Außenbeleuchtung des Fahrzeugs, beispielsweise Front-Scheinwerfer, Rückstrahler oder Fahrtrichtungsanzeiger des Fahrzeugs, zumindest teilweise abgedeckt bzw. verdeckt. Um gesetzliche Vorschriften für die Außenbeleuchtung des Fahrzeugs einzuhalten und die Sicht für einen Fahrer des Fahrzeugs zu verbessern, ist an dem Fahrzeug und/oder an dem Anbauelement häufig eine Ersatz-Außenbeleuchtung bzw. eine Arbeits-Außenbeleuchtung vorgesehen. Diese Arbeits-Außenbeleuchtung wird üblicherweise bei der Montage des Anbauelements an das Fahrzeug aktiviert und bei einer Demontage des Anbauelements von dem Fahrzeug deaktiviert. Die Aktivierung und Deaktivierung der Arbeits-Außenbeleuchtung erfolgt dabei manuell durch einen Fahrer des Fahrzeugs. Die manuelle Aktivierung und Deaktivierung der Arbeits-Außenbeleuchtung durch den Fahrer hat jedoch den Nachteil, dass die Aktivierung und Deaktivierung der Arbeits-Außenbeleuchtung regelmäßig vom Fahrer vergessen wird.

US 2014/0.052.335 offenbart eine Vorrichtung gemäß dem Oberbegriff des Anspruchs 1.

Aufgabe der Erfindung ist es, eine Vorrichtung und ein Verfahren zur Unterstützung eines Fahrers eines Fahrzeugs, insbesondere eines Nutzfahrzeugs, bereitzustellen, mittels denen die Außenbeleuchtung des Fahrzeugs und/oder des Anbauelements auf komfortable und zuverlässige Weise verstellt werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird eine Vorrichtung zur Unterstützung eines Fahrers eines Fahrzeugs, insbesondere eines Nutzfahrzeugs, vorgeschlagen, wobei das Fahrzeug wenigstens eine Fixiereinrichtung aufweist, mittels der wenigstens ein Anbauelement, insbesondere eine Schneeräumeinrichtung und/oder ein Frontlader und/oder eine Kehreinrichtung, lösbar an dem Fahrzeug festgelegt werden kann. Erfindungsgemäß ist eine fahrzeugseitige Festlegungs-Erfassungseinrichtung vorgesehen, mittels der selbsttätig bzw. automatisch erfasst und/oder erkannt werden kann, ob das wenigstens eine Anbauelement an dem Fahrzeug festgelegt ist. Zudem ist eine signaltechnisch mit der Festlegungs-Erfassungseinrichtung verbundene Regel- und/oder Steuereinrichtung vorgesehen, mittels der in Abhängigkeit von der Festlegung des Anbauelements an dem Fahrzeug eine Außenbeleuchtung des Fahrzeugs und/oder des wenigstens einen Anbauelements selbsttätig bzw. automatisch verstellt und/oder eingestellt werden kann.

Auf diese Weise wird die Außenbeleuchtung des Fahrzeugs und/oder des Anbauelements besonders komfortabel und zuverlässig eingestellt bzw. verstellt, da nun in Abhängigkeit davon, ob mittels der Festlegungs-Erfassungseinrichtung eine Festlegung des wenigstens einen Anbauelements an dem Fahrzeug erfasst wird oder nicht, die Außenbeleuchtung des Fahrzeugs selbsttätig verstellt bzw. eingestellt wird. Dadurch wird der Fahrerkomfort erhöht und die aktuell erforderliche bzw. benötigte Einstellung der Fahrzeug-Außenbeleuchtung zuverlässig eingestellt.

In einer bevorzugten Ausgestaltung der erfindungsgemäßen Vorrichtung wird, sofern mittels der Festlegungs-Erfassungseinrichtung keine Festlegung des wenigstens einen Anbauelements an dem Fahrzeug erfasst wird, mittels der Regel- und/oder Steuereinrichtung selbsttätig bzw. automatisch eine Grundbeleuchtung der Fahrzeug-Außenbeleuchtung zumindest teilweise aktiviert. Alternativ und/oder zusätzlich kann, sofern mittels der Festlegungs-Erfassungseinrichtung eine Festlegung des wenigstens einen Anbauelements an dem Fahrzeug erfasst wird, mittels der Regel- und/oder Steuereinrichtung selbsttätig bzw. automatisch eine Grundbeleuchtung der Fahrzeug-Außenbeleuchtung zumindest teileweise deaktiviert werden. Auf diese Weise wird die Grundbeleuchtung des Fahrzeugs komfortabel und zuverlässig aktiviert bzw. deaktiviert, wenn dies erforderlich ist.

Weiter bevorzugt wird, sofern mittels der Festlegungs-Erfassungseinrichtung eine Festlegung des wenigstens einen Anbauelements an dem Fahrzeug erfasst wird, mittels der Regel- und/oder Steuereinrichtung selbsttätig bzw. automatisch eine Arbeitsbeleuchtung der Fahrzeug-Außenbeleuchtung aktiviert. Alternativ und/oder zusätzlich kann, sofern mittels der Festlegungs-Erfassungseinrichtung keine Festlegung des wenigstens einen Anbauelements an dem Fahrzeug erfasst wird, mittels der Regel- und/oder Steuereinrichtung selbsttätig bzw. automatisch eine Arbeitsbeleuchtung der Fahrzeug-Außenbeleuchtung deaktiviert werden. So wird die Arbeitsbeleuchtung des Fahrzeugs komfortabel und zuverlässig aktiviert bzw. deaktiviert, wenn dies vorteilhaft ist.

In einer bevorzugten konkreten Ausgestaltung ist die Grundbeleuchtung durch wenigstens einen fahrzeugseitigen Grund-Frontscheinwerfer und/oder durch wenigstens einen fahrzeugseitigen Grund-Fahrtrichtungsanzeiger gebildet. Weiter bevorzugt ist die Arbeitsbeleuchtung durch wenigstens einen fahrzeugseitigen Arbeits-Frontscheinwerfer und/oder durch wenigstens einen fahrzeugseitigen Arbeits-Fahrtrichtungsanzeiger gebildet.

Vorzugsweise wird, sofern mittels der Festlegungs-Erfassungseinrichtung eine Festlegung des wenigstens einen Anbauelements an dem Fahrzeug erfasst wird, mittels der Regel- und/oder Steuereinrichtung selbsttätig bzw. automatisch die Außenbeleuchtung des Anbauelements aktiviert. Dadurch wird die Außenbeleuchtung des Anbauelements auf komfortable und zuverlässige Weise aktiviert, wenn diese benötigt wird. Alternativ und/oder zusätzlich kann, sofern mittels der Festlegungs-Erfassungseinrichtung keine Festlegung des wenigstens einen Anbauelements an dem Fahrzeug erfasst wird, mittels der Regel- und/oder Steuereinrichtung selbsttätig bzw. automatisch die Außenbeleuchtung des Anbauelements deaktiviert werden. So wird die Außenbeleuchtung des Anbauelements zuverlässig und komfortabel deaktiviert, wenn diese nicht mehr benötigt wird. Die Außenbeleuchtung des Anbauelements kann beispielsweise durch wenigstens einen Arbeitsscheinwerfer, durch wenigstens eine Warnleuchte oder durch Fahrtrichtungsanzeiger gebildet sein.

Grundsätzlich kann das wenigstens eine an dem Fahrzeug festgelegte Anbauelement natürlich überall an dem Fahrzeug angeordnet sein. Beispielsweise kann das an dem Fahrzeug festgelegte Anbauelement, in Fahrzeug-Längsrichtung gesehen, hinten an dem Fahrzeug angeordnet sein. Bevorzugt ist es jedoch, wenn das an dem Fahrzeug festgelegte Anbauelement, in Fahrzeug-Längsrichtung gesehen, vorne an dem Fahrzeug angeordnet ist. Bei einer derartigen Anordnung ist die selbsttätige Verstellung der Außenbeleuchtung mittels der Regel- und/oder Steuereinrichtung besonders vorteilhaft, da durch diese Anordnung üblicherweise die Frontscheinwerfer des Fahrzeugs von dem Anbauelement abgedeckt bzw. verdeckt werden. Durch diese Verdeckung kann die Sicht des Fahrers, insbesondere bei Dunkelheit, deutlich eingeschränkt werden. Zudem kann der Fahrer bei einer derartigen Verdeckung durch an dem Anbauelement reflektierte Lichtstrahlen der Frontscheinwerfer geblendet werden. Weiter bevorzugt ist das wenigstens eine an dem Fahrzeug festgelegte Anbauelement, in Fahrzeug-Querrichtung gesehen, mittig und/oder seitlich an dem Fahrzeug angeordnet. Bei einer derartigen Anordnung ist die selbsttätige Verstellung der Außenbeleuchtung mittels der Regel- und/oder Steuereinrichtung ebenfalls besonders vorteilhaft.

Gemäß der Erfindung weist die Festlegungs-Erfassungseinrichtung wenigstens eine fahrzeugseitige Festlegungs-Erfassungseinrichtung auf. Mittels einer fahrzeugseitigen Festlegungs-Erfassungseinrichtung kann die Festlegung des wenigstens einen Anbauelements an dem Fahrzeug besonders einfach erfasst bzw. erkannt werden. Bevorzugt ist dabei vorgesehen, dass die fahrzeugseitige Festlegungs-Erfassungseinrichtung zumindest teilweise durch wenigstens eine Komponente, beispielsweise durch wenigstens einen Sensor oder durch wenigstens ein Diagnosesystem, gebildet ist, die von wenigstens einem weiteren Fahrzeugsystem verwendet bzw. genutzt werden.

Zusätzlich zu der fahrzeugseitigen Festlegungs-Erfassungseinrichtung kann die Festlegungs-Erfassungseinrichtung auch wenigstens eine anbauelementseitige Festlegungs-Erfassungseinrichtung aufweisen. Die anbauelementseitige Festlegungs-Erfassungseinrichtung kann dabei beispielsweise durch wenigstens eine Bild-Erfassungseinrichtung, insbesondere durch eine Kamera, gebildet sein, mittels der im festgelegten Zustand des Anbauelements an dem Fahrzeug das Fahrzeug bildlich und/oder filmisch erfasst wird.

In einer bevorzugten konkreten Ausgestaltung weist die fahrzeugseitige Festlegungs-Erfassungseinrichtung eine Kraft-Erfassungseinrichtung auf, mittels der die auf die Fahrzeugräder des Fahrzeugs wirkenden Kräfte, insbesondere die auf die Fahrzeugräder des Fahrzeugs wirkenden Gewichtskräfte, erfasst werden können. Mittels einer derartigen Kraft-Erfassungseinrichtung kann zuverlässig erfasst werden, ob das wenigstens eine Anbauelement aktuell an dem Fahrzeug festgelegt ist oder nicht. Bevorzugt ist dabei vorgesehen, dass die Kraft-Erfassungseinrichtung wenigstens einen Drucksensor zur Messung eines Luftdrucks in einem Luftbalg einer Luftfederung des Fahrzeugs und/oder wenigstens einen Wegsensor zur Messung einer Auslenkung einer Federung des Fahrzeugs und/oder eine Reifendruck-Erfassungseinrichtung, insbesondere wenigstens einen Reifendrucksensor, zur Erfassung eines Luftdrucks wenigstens eines Fahrzeugrads aufweist.

Alternativ und/oder zusätzlich zu der Kraft-Erfassungseinrichtung kann die fahrzeugseitige Festlegungs-Erfassungseinrichtung auch eine Lage-Erfassungseinrichtung aufweisen, mittels der die Lage und/oder die Ausrichtung des Fahrzeugs relativ zur Fahrbahn erfasst werden kann. Dadurch kann eine Festlegung des wenigstens einen Anbauelements an dem Fahrzeug ebenfalls zuverlässig erfasst werden. Bevorzugt ist dabei vorgesehen, dass die Lage-Erfassungseinrichtung wenigstens einen Neigungssensor zur Messung der Neigung des Fahrzeugs relativ zur Fahrbahn und/oder wenigstens einen Beschleunigungssensor zur Messung der Beschleunigung des Fahrzeugs aufweist. Mittels des Neigungssensors kann dabei beispielsweise ein Nickwinkel und/oder ein Wankwinkel des Fahrzeugs gemessen werden. Mittels des Beschleunigungssensors kann beispielsweise eine Längsbeschleunigung des Fahrzeugs und/oder eine Querbeschleunigung des Fahrzeugs gemessen werden.

Weiter alternativ und/oder zusätzlich kann die fahrzeugseitige Festlegungs-Erfassungseinrichtung auch eine Objekt-Erfassungseinrichtung aufweisen, mittels der in der unmittelbaren Umgebung des Fahrzeugs befindliche Objekte erfasst werden können. Mittels einer derartigen Objekt-Erfassungseinrichtung kann eine Festlegung des wenigstens einen Anbauelements an dem Fahrzeug zuverlässig und einfach erfasst werden. Bevorzugt ist dabei vorgesehen, dass die Objekt-Erfassungseinrichtung wenigstens einen Ultraschallsensor und/oder wenigstens einen Radarsensor und/oder wenigstens einen Lichtsensor und/oder wenigstens einen Lasersensor und/oder wenigstens eine Bild-Erfassungseinrichtung, insbesondere eine Kamera, aufweist. Besonders bevorzugt wird die Objekt-Erfassungseinrichtung von wenigstens einem weiteren Fahrerassistenzsystem des Fahrzeugs verwendet. Dadurch kann ein besonders kostengünstiger Aufbau realisiert werden. Das weitere Fahrerassistenzsystem kann dabei beispielsweise ein Abstandsregeltempomat (ACC), ein adaptiver Fernlichtassistent, ein Bremsassistent, eine Einparkhilfe, eine Lichtautomatik, ein Nachtsichtassistent, ein Spurerkennungssystem, ein Spurhalteassistent oder ein Spurwechselassistent des Fahrzeugs sein.

Weiter bevorzugt kann das Anbauelement energieübertragend mit dem Fahrzeug verbunden werden, wobei die Festlegungs-Erfassungseinrichtung eine Verbindungs-Erfassungseinrichtung aufweist, mittels der eine energieübertragende Verbindung zwischen dem Fahrzeug und dem Anbauelement erfasst werden kann. Mittels einer derartigen Verbindungs-Erfassungseinrichtung kann eine Festlegung des wenigstens einen Anbauelements an dem Fahrzeug besonders einfach erfasst werden. Die energieübertragende Verbindung zwischen dem Fahrzeug und dem Anbauelement ist dabei vorzugsweise durch eine elektrische Verbindung gebildet, mittels der das Anbauelement und/oder wenigstens eine Komponente des Anbauelements mit elektrischer Energie versorgt werden. Die wenigstens eine Komponente des Anbauelements kann beispielsweise durch einen Arbeitsscheinwerfer gebildet sein. Sofern die energieübertragende Verbindung durch die elektrische Verbindung gebildet ist, kann die elektrische Verbindung zwischen dem Fahrzeug und dem Anbauteil beispielsweise durch Testpulsen und/oder durch Erfassung des elektrischen Energieverbrauchs des Fahrzeugs erfasst werden. Über das Testpulsen kann zudem auch ein Kabelriss und/oder ein Kurzschluss erfasst werden.

Vorzugsweise kann das Anbauelement datenübertragend mit dem Fahrzeug verbunden werden, wobei die Festlegungs-Erfassungseinrichtung eine Verbindungs-Erfassungseinrichtung aufweist, mittels der eine datenübertragende Verbindung zwischen dem Fahrzeug und dem Anbauelement erfasst werden kann. Die datenübertragende Verbindung kann dabei beispielsweise mittels eines CAN-Bus-Systems hergestellt werden.

In einer besonders bevorzugten Ausgestaltung der erfindungsgemäßen Vorrichtung kann das wenigstens eine Anbauelement zumindest bereichsweise starr und/oder unbeweglich an dem Fahrzeug und/oder an wenigstens einem fahrzeugseitigen Fixierelement bzw. Fixierbereich festgelegt werden. Durch eine derartige Festlegung kann die Außenbeleuchtung des Fahrzeugs und/oder des Anbauelements besonders einfach und effektiv in Abhängigkeit von der Festlegung des wenigstens einen Anbauelements an dem Fahrzeug verstellt bzw. eingestellt werden.

Zur Lösung der bereits genannten Aufgabe wird ferner ein Verfahren zur Unterstützung eines Fahrers eines Fahrzeugs, insbesondere eines Nutzfahrzeugs, beansprucht, wobei das Fahrzeug wenigstens eine Fixiereinrichtung aufweist, mittels der der wenigstens ein Anbauelement, insbesondere eine Schneeräumeinrichtung und/oder ein Frontlader und/oder eine Kehreinrichtung, lösbar an dem Fahrzeug festgelegt werden kann. Erfindungsgemäß ist eine fahrzeugseitige Festlegungs-Erfassungseinrichtung vorgesehen, mittels der selbsttätig bzw. automatisch erfasst und/oder erkannt wird, ob das wenigstens eine Anbauelement an dem Fahrzeug festgelegt ist. Zudem ist auch eine signaltechnisch mit der Festlegungs-Erfassungseinrichtung verbundene Regel- und/oder Steuereinrichtung vorgesehen, mittels der in Abhängigkeit von der Festlegung des Anbauelements an dem Fahrzeug eine Außenbeleuchtung des Fahrzeugs und/oder des wenigstens einen Anbauelements selbsttätig bzw. automatisch verstellt und/oder eingestellt wird.

Die sich durch die erfindungsgemäße Verfahrensführung ergebenden Vorteile sind identisch mit den bereits gewürdigten Vorteilen der erfindungsgemäßen Vorrichtung, so dass diese an dieser Stelle nicht wiederholt werden.

Des Weiteren wird auch ein Fahrzeug, insbesondere ein Nutzfahrzeug, mit der erfindungsgemäßen Vorrichtung und/oder zur Durchführung des erfindungsgemäßen Verfahrens beansprucht. Die sich hieraus ergebenden Vorteile sind ebenfalls identisch mit den bereits gewürdigten Vorteilen der erfindungsgemäßen Vorrichtung, so dass diese hier ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Perspektivdarstellung ein Fahrzeug mit einer Schneeräumeinrichtung;
- Fig. 2: in einer Perspektivdarstellung das Fahrzeug ohne Schneeräumeinrichtung;
- Fig. 3: in einer Perspektivdarstellung einen Teil der Schneeräumeinrichtung, und
- Fig. 4: eine Darstellung, anhand der der Aufbau der erfindungsgemäßen Vorrichtung erläutert wird.

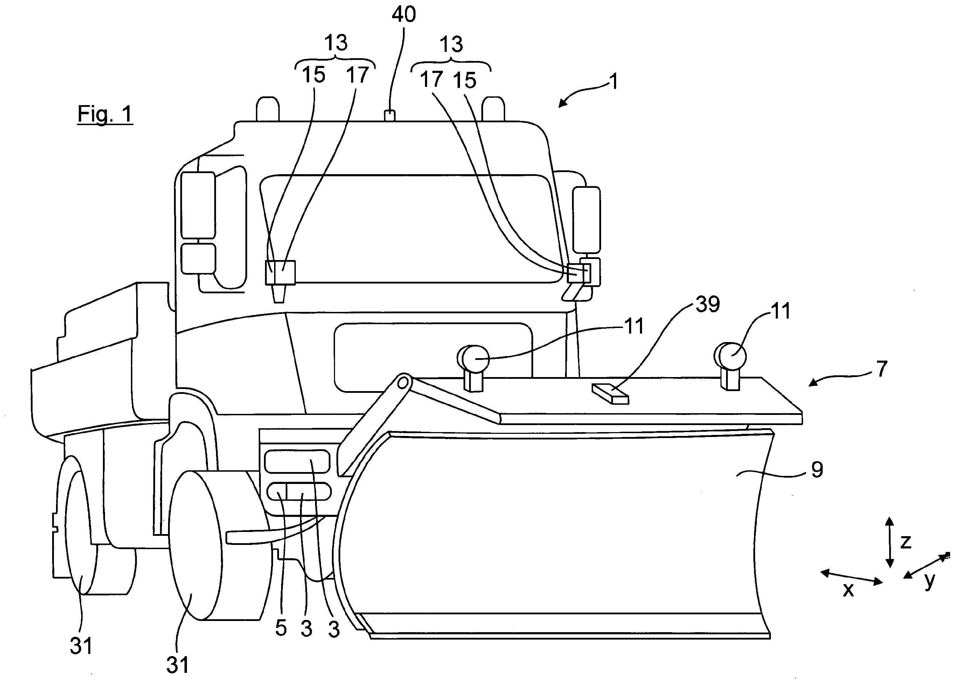

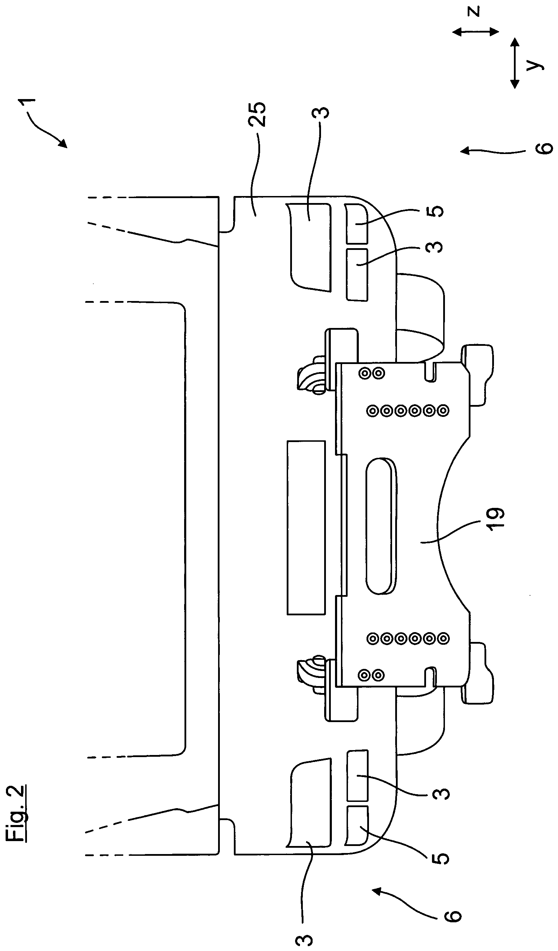

In Fig. 1 ist ein hier beispielhaft als Lastkraftwagen ausgebildetes Fahrzeug 1 gezeigt. Der Lastkraftwagen 1 weist mehrere, hier beispielhaft vier, Grund-Frontscheinwerfer 3 und mehrere, hier beispielhaft zwei, in Fahrzeug-Längsrichtung x gesehen, vorne an dem Lastkraftwagen 1 angeordnete Grund-Fahrtrichtungsanzeiger 5 auf. In Fig. 1 ist nur ein Teil der Grund-Frontscheinwerfer 3 und der Grund-Fahrtrichtungsanzeiger 5 ersichtlich, da ein Teil der Grund-Frontscheinwerfer 3 und der Grund-Fahrtrichtungsanzeiger 5 von einem lösbar an dem Fahrzeug 1 festgelegten, hier beispielhaft als Schneeräumeinrichtung 7 ausgebildeten Anbauelement verdeckt werden. In Fig. 2 ist das Fahrzeug 1 ohne Schneeräumeinrichtung 7 dargestellt. Gemäß Fig. 2 sind hier, in Fahrzeug-Querrichtung y gesehen, seitlich außen an jeder Fahrzeugseite 6 jeweils zwei Grund-Frontscheinwerfer 3 und ein Grund-Fahrtrichtungsanzeiger 5 angeordnet. Zudem sind die Grund-Frontscheinwerfer 3 und die Grund-Fahrtrichtungsanzeiger 5 hier an einem, in Fahrzeug-Hochrichtung z gesehen, unteren Bereich des Fahrzeugs 1 angeordnet.

Wie aus Fig. 1 weiter hervorgeht, weist das Fahrzeug 1 hier auch mehrere, hier beispielhaft zwei, Arbeitsbeleuchtungsmodule 13 auf. Jedes Arbeitsbeleuchtungsmodul 13 weist einen Arbeits-Fahrtrichtungsanzeiger 15 und einen Arbeits-Frontscheinwerfer 17 auf. Die Arbeitsbeleuchtungsmodule 13 sind hier beispielhaft, in Fahrzeug-Längsrichtung x gesehen, vorne an dem Fahrzeug 1 angeordnet. Zudem ist hier beispielhaft, in Fahrzeug-Querrichtung y gesehen, seitlich außen an jeder Fahrzeugseite 6 jeweils ein Arbeitsbeleuchtungsmodul 13 angeordnet. Weiter sind die Arbeitsbeleuchtungsmodule 13 hier beispielhaft, in Fahrzeug-Hochrichtung z gesehen, oberhalb der Grund-Frontscheinwerfer 3 und der Grund-Fahrtrichtungsanzeiger 5 an dem Fahrzeug 1 angeordnet. Die Arbeitsbeleuchtungsmodule 13 sind Bestandteil einer Winterdienst-Ausrüstung des Fahrzeugs 1.

Weiter ist die Schneeräumeinrichtung 7 hier beispielhaft, in Fahrzeug-Längsrichtung x gesehen, vorne an dem Fahrzeug 1 angeordnet. Zudem erstreckt sich ein Räumschild 9 der Schneeräumeinrichtung 7 hier beispielhaft, in Fahrzeug-Querrichtung y gesehen, in etwa über die gesamte Breite des Lastkraftwagens 1. Des Weiteren weist die Schneeräumeinrichtung 7 hier mehrere, hier beispielhaft zwei, Arbeitsscheinwerfer 11 auf, mittels denen ein, in Fahrzeug-Längsrichtung x gesehen, vor der Schneeräumeinrichtung 7 liegender Fahrstreckenbereich beleuchtet werden kann. Zudem weist die Schneeräumeinrichtung 7 hier beispielhaft auch eine Bild-Erfassungseinrichtung 39 auf, mittels der das Fahrzeug 1 bildlich und/oder filmisch erfasst werden kann, wenn die Schneeräumeinrichtung 7 an dem Fahrzeug 1 festgelegt ist. Die Bild-Erfassungseinrichtung 39 der Schneeräumeinrichtung 7 bildet eine Festlegungs-Erfassungseinrichtung aus, mittels der selbsttätig bzw. automatisch erfasst wird, ob die Schneeräumeinrichtung 7 aktuell an dem Fahrzeug 1 festgelegt ist oder nicht.

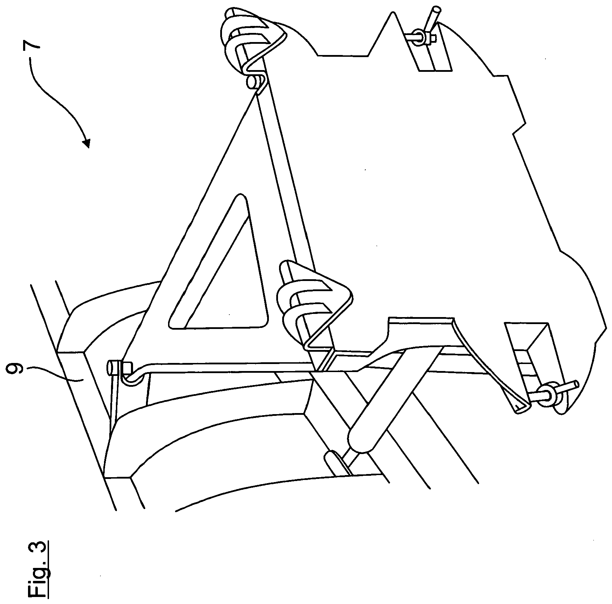

Wie in Fig. 2 gezeigt ist, weist das Fahrzeug 1 hier beispielhaft eine Fixierplatte 19 auf, an der die Schneeräumeinrichtung 7 lösbar sowie starr bzw. unbeweglich festgelegt werden kann. Gemäß Fig. 2 und 3 erfolgt die Festlegung der Schneeräumeinrichtung 7 an der Fixierplatte 19 hier beispielhaft mittels einer Flanschverbindung. Die Fixierplatte 19 ist hier beispielhaft derart an einem Grundkörper 25 des Fahrzeugs 1 festgelegt, dass sie relativ zu dem Grundkörper 25 des Fahrzeugs 1 verlagert und verschwenkt werden kann. Auf diese Weise kann auch die an dem Fahrzeug 1 festgelegte Schneeräumeinrichtung 7 relativ zu dem Grundkörper 25 des Fahrzeugs 1 verlagert und verschwenkt werden. Alternativ könnte die Fixierplatte 19 beispielsweise aber auch derart an dem Grundkörper 25 des Fahrzeugs 1 festgelegt sein, dass die Fixierplatte 19 nicht relativ zu dem Grundkörper 25 des Fahrzeugs 1 verlagert und verschwenkt werden kann.

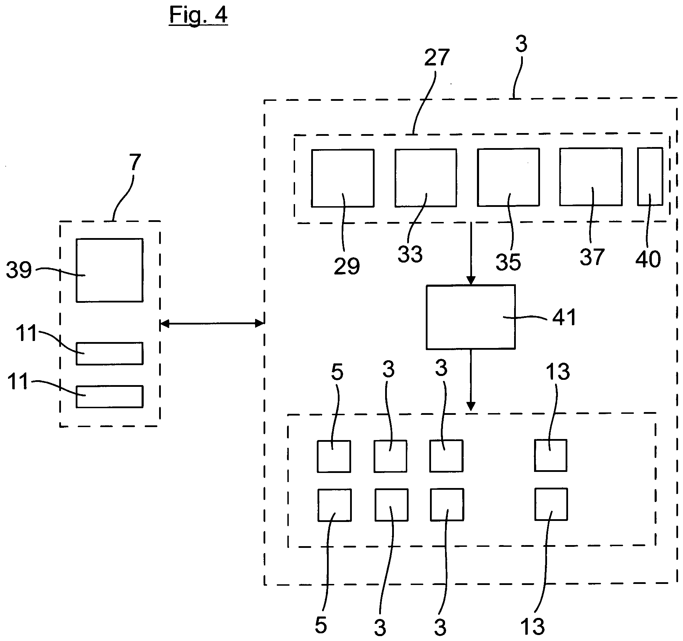

Wie in Fig. 4 gezeigt ist, weist das Fahrzeug 1 hier beispielhaft ebenfalls eine Festlegungs-Erfassungseinrichtung 27 auf, mittels der selbsttätig bzw. automatisch erfasst werden kann, ob die Schneeräumeinrichtung 7 aktuell an dem Fahrzeug 1 festgelegt ist oder nicht. Die fahrzeugseitige Festlegungs-Erfassungseinrichtung 27 weist hier beispielhaft eine Gewichtskraft-Erfassungseinrichtung 29 auf, mittels der die auf Fahrzeugräder 31 (Fig. 1) des Fahrzeugs 1 wirkenden Gewichtskräfte erfasst werden können. Zudem weist die fahrzeugseitige Festlegungs-Erfassungseinrichtung 27 hier beispielhaft auch eine Lage-Erfassungseinrichtung 33 auf, mittels der die Lage bzw. die Ausrichtung des Fahrzeugs 1 relativ zur Fahrbahn erfasst werden kann. Weiter weist die fahrzeugseitige Festlegungs-Erfassungseinrichtung 27 hier beispielhaft auch eine Objekt-Erfassungseinrichtung 35, mittels in der unmittelbaren Umgebung des Lastkraftwagens 1 befindliche Objekte erfasst werden können. Zudem weist die fahrzeugseitige Festlegungs-Erfassungseinrichtung 27 hier beispielhaft auch eine Verbindungs-Erfassungseinrichtung 37 auf, mittels der erfasst werden kann, ob zwischen der Schneeräumeinrichtung 7 und dem Fahrzeug 1 eine elektrische Verbindung zur Versorgung der Schneeräumeinrichtung 7 bzw. der Arbeitscheinwerfer 11 und der Bild-Erfassugnseinrichtung 39 mit elektrischer Energie hergestellt ist. Des Weiteren weist die fahrzeugseitige Festlegungs-Erfassungseinrichtung 27 hier beispielhaft auch eine Bild-Erfassungseinrichtung 40 (Fig. 1) auf, mittels der die Schneeräumeinrichtung 7 bildlich und/oder filmisch erfasst werden kann, wenn die Schneeräumeinrichtung 7 an dem Fahrzeug 1 festgelegt ist.

Des Weiteren sind die Bild-Erfassungseinrichtung 39 der Schneeräumeinrichtung 7 und die fahrzeugseitige Festlegungs-Erfassungseinrichtung 27 signaltechnisch mit einer hier beispielhaft fahrzeugseitigen Regel- und/oder Steuereinrichtung 41 verbunden. Mittels der Regel- und/oder Steuereinrichtung 41 wird in Abhängigkeit davon, ob die Schneeräumeinrichtung 7 an dem Lastkraftwagens 1 festgelegt ist oder nicht, die Außenbeleuchtung des Fahrzeugs 1 eingestellt bzw. verstellt.

Konkret werden hier, sofern mittels der fahrzeugseitigen Anbauelement-Erfassungseinrichtung 27 und der Bild-Erfassungseinrichtung 39 der Schneeräumeinrichtung 7 keine Festlegung der Schneeräumeinrichtung 7 an dem Fahrzeug 1 erfasst wird, mittels der Regel- und/oder Steuereinrichtung 41 selbsttätig bzw. automatisch die fahrzeugseitigen Grund-Frontscheinwerfer 3 und die fahrzeugseitigen Grund-Fahrtrichtungsanzeiger 5 aktiviert sowie die Arbeitsscheinwerfer 11 der Schneeräumeinrichtung 7 und die fahrzeugseitigen Arbeitsbeleuchtungsmodule 13 deaktiviert. Sofern mittels der fahrzeugseitigen Anbauelement-Erfassungseinrichtung 27 und der Bild-Erfassungseinrichtung 39 eine Festlegung der Schneeräumeinrichtung 7 an dem Fahrzeug 1 erfasst wird, werden hier beispielhaft mittels der Regel- und/oder Steuereinrichtung 41 selbsttätig bzw. automatisch die Arbeitsscheinwerfer 11 der Schneeräumeinrichtung 7 und die fahrzeugseitigen Arbeitsbeleuchtungsmodule 13 aktiviert sowie die fahrzeugseitigen Grund-Frontscheinwerfer 3 und die fahrzeugseitigen Grund-Fahrtrichtungsanzeiger 5 deaktiviert.

### Bezugszeichenliste

- 1: Fahrzeug
- 3: Grund-Frontscheinwerfer
- 5: Grund-Fahrtrichtungsanzeiger
- 6: Fahrzeugseite
- 7: Schneeräumeinrichtung
- 9: Räumschild
- 11: Arbeitsscheinwerfer
- 13: Arbeitsbeleuchtungsmodul
- 15: Arbeits-Fahrtrichtungsanzeiger
- 17: Arbeits-Frontscheinwerfer
- 19: Fixierplatte
- 25: Grundkörper
- 27: fahrzeugseitige Festlegungs-Erfassungseinrichtung
- 29: Gewichtskraft-Erfassungseinrichtung
- 31: Fahrzeugrad
- 33: Lage-Erfassungseinrichtung
- 35: Objekt-Erfassungseinrichtung
- 37: Verbindungs-Erfassungseinrichtung
- 39: Bild-Erfassungseinrichtung
- 40: Bild-Erfassungseinrichtung
- 41: Regel- und/oder Steuereinrichtung

## Patentansprüche

1. Vorrichtung zur Unterstützung eines Fahrers eines Fahrzeugs, insbesondere eines Nutzfahrzeugs, wobei das Fahrzeug (1) wenigstens eine Fixiereinrichtung (19) aufweist, mittels der wenigstens ein Anbauelement (7) lösbar an dem Fahrzeug (1) festlegbar ist, wobei eine Festlegungs-Erfassungseinrichtung (27, 39) vorgesehen ist, mittels der selbsttätig erfassbar und/oder erkennbar ist, ob das wenigstens eine Anbauelement (7) an dem Fahrzeug (1) festgelegt ist, wobei eine signaltechnisch mit der Festlegungs-Erfassungseinrichtung (27, 39) verbundene Regel- und/oder Steuereinrichtung (41) vorgesehen ist, mittels der in Abhängigkeit von der Festlegung des Anbauelements (7) an dem Fahrzeug (1) eine Außenbeleuchtung (3, 5, 11, 15, 17) des Fahrzeugs (1) und/oder des wenigstens einen Anbauelements (7) selbsttätig verstellbar und/oder einstellbar ist, **dadurch gekennzeichnet, dass** die Festlegungs-Erfassungseinrichtung wenigstens eine fahrzeugseitige Festlegungs-Erfassungseinrichtung (27) aufweist.

2. Vorrichtung nach Anspruch 1, **dadurch gekennzeichnet, dass**, sofern mittels der Festlegungs-Erfassungseinrichtung (25, 39) keine Festlegung des wenigstens einen Anbauelements (7) an dem Fahrzeug (1) erfasst wird, mittels der Regel- und/oder Steuereinrichtung (41) selbsttätig eine Grundbeleuchtung (3; 5) der Fahrzeug-Außenbeleuchtung (3, 5, 15, 17) zumindest teilweise aktivierbar ist, und/oder dass, sofern mittels der Festlegungs-Erfassungseinrichtung (27, 39) eine Festlegung des wenigstens einen Anbauelements (7) an dem Fahrzeug (1) erfasst wird, mittels der Regel- und/oder Steuereinrichtung (41) selbsttätig eine Grundbeleuchtung (3, 5) der Fahrzeug-Außenbeleuchtung (3, 5, 16, 17) zumindest teilweise deaktivierbar ist.

3. Vorrichtung nach Anspruch 1 oder 2, **dadurch gekennzeichnet, dass**, sofern mittels der Festlegungs-Erfassungseinrichtung (27, 39) eine Festlegung des wenigstens einen Anbauelements (7) an dem Fahrzeug (1) erfasst wird, mittels der Regel- und/oder Steuereinrichtung (41) selbsttätig eine Arbeitsbeleuchtung (15, 17) der Fahrzeug-Außenbeleuchtung (3, 5, 15, 17) aktivierbar ist, und/oder dass, sofern mittels der Festlegungs-Erfassungseinrichtung (27, 39) keine Festlegung des wenigstens einen Anbauelements (7) an dem Fahrzeug (1) erfasst wird, mittels der Regel- und/oder Steuereinrichtung (41) selbsttätig eine Arbeitsbeleuchtung (15, 17) der Fahrzeug-Außenbeleuchtung (3, 5, 15, 17) deaktivierbar ist.

4. Vorrichtung nach Anspruch 2 oder 3, **dadurch gekennzeichnet, dass** die Grundbeleuchtung durch wenigstens einen fahrzeugseitigen Grund-Frontscheinwerfer (3) und/oder wenigstens einen fahrzeugseitigen Grund-Fahrtrichtungsanzeiger (5) gebildet ist, und/oder dass die Arbeitsbeleuchtung durch wenigstens einen fahrzeugseitigen Arbeits-Frontscheinwerfer (17) und/oder wenigstens einen fahrzeugseitigen Arbeits-Fahrtrichtungsanzeiger 15) gebildet ist.

5. Vorrichtung nach einem der vorhergehenden Ansprüche, **dadurch gekennzeichnet, dass**, sofern mittels der Festlegungs-Erfassungseinrichtung (27, 39) eine Festlegung des wenigstens einen Anbauelements (7) an dem Fahrzeug (1) erfasst wird, mittels der Regel- und/oder Steuereinrichtung (41) selbsttätig die Außenbeleuchtung (11) des Anbauelements (7) aktivierbar ist, und/oder dass, sofern mittels der Festlegungs-Erfassungseinrichtung (27, 39) keine Festlegung des wenigstens einen Anbauelements (7) an dem Fahrzeug (1) erfasst wird, mittels der Regel- und/oder Steuereinrichtung (41) selbsttätig die Außenbeleuchtung (11) des Anbauelements (7) deaktivierbar ist.

6. Vorrichtung nach einem der vorhergehenden Ansprüche, **dadurch gekennzeichnet, dass** das wenigstens eine an dem Fahrzeug festgelegte Anbauelement (7), in Fahrzeug-Längsrichtung (x) gesehen, vorne an dem Fahrzeug (1) angeordnet ist, und/oder dass das wenigstens eine an dem Fahrzeug (1) festgelegte Anbauelement (7), in Fahrzeug-Querrichtung (y) gesehen, mittig und/oder seitlich an dem Fahrzeug (1) angeordnet ist.

7. Vorrichtung nach einem der vorhergehenden Ansprüche, **dadurch gekennzeichnet, dass** die die Festlegungs-Erfassungseinrichtung wenigstens eine anbauelementseitige Festlegungs-Erfassungseinrichtung (39) aufweist, wobei bevorzugt vorgesehen ist, dass die wenigstens eine anbauelementseitige Festlegungs-Erfassungseinrichtung wenigstens eine Bild-Erfassungseinrichtung (39), insbesondere eine Kamera, aufweist.

8. Vorrichtung nach einem der vorhergehenden Ansprüche, **dadurch gekennzeichnet, dass** die fahrzeugseitige Festlegungs-Erfassungseinrichtung (27) eine Kraft-Erfassungseinrichtung (29) aufweist, mittels der die auf die Fahrzeugräder (31) des Fahrzeugs (1) wirkenden Kräfte, insbesondere die auf die Fahrzeugräder des Fahrzeugs wirkenden Gewichtskräfte, erfassbar sind, wobei bevorzugt vorgesehen ist, dass die Kraft-Erfassungseinrichtung (29) wenigstens einen Drucksensor zur Messung eines Luftdrucks in einem Luftbalg einer Luftfederung des Fahrzeugs und/oder wenigstens einen Wegsensor zur Messung einer Auslenkung einer Federung des Fahrzeugs und/oder eine Reifendruck-Erfassungseinrichtung, insbesondere wenigstens einen Reifendrucksensor, zur Erfassung eines Luftdrucks wenigstens eines Fahrzeugrads aufweist.

9. Vorrichtung nach einem der vorhergehenden Ansprüche, **dadurch gekennzeichnet, dass** die fahrzeugseitige Festlegungs-Erfassungseinrichtung (27) eine Lage-Erfassungseinrichtung (33) aufweist, mittels der die Lage und/oder die Ausrichtung des Fahrzeugs (1) relativ zur Fahrbahn erfassbar ist, wobei bevorzugt vorgesehen ist, dass die Lage-Erfassungseinrichtung (33) wenigstens einen Neigungssensor zur Messung der Neigung des Fahrzeugs (1) relativ zur Fahrbahn und/oder wenigstens einen Beschleunigungssensor zur Messung der Beschleunigung des Fahrzeugs (1) aufweist.

10. Vorrichtung nach einem der vorhergehenden Ansprüche, **dadurch gekennzeichnet, dass** die fahrzeugseitige Festlegungs-Erfassungseinrichtung (27) eine Objekt-Erfassungseinrichtung (35) aufweist, mittels der in der unmittelbaren Umgebung des Fahrzeugs (1) befindliche Objekte erfassbar sind, wobei bevorzugt vorgesehen ist, dass die Objekt-Erfassungseinrichtung (35) wenigstens einen Ultraschallsensor und/oder wenigstens einen Radarsensor und/oder wenigstens einen Lichtsensor und/oder wenigstens einen Lasersensor und/oder wenigstens eine Bild-Erfassungseinrichtung, insbesondere eine Kamera, aufweist.

11. Vorrichtung nach einem der vorhergehenden Ansprüche, **dadurch gekennzeichnet, dass** das Anbauelement (7) energieübertragend mit dem Fahrzeug (1) verbindbar ist, wobei die fahrzeugseitige Festlegungs-Erfassungseinrichtung (27) eine Verbindungs-Erfassungseinrichtung (37) aufweist, mittels der eine energieübertragende Verbindung zwischen dem Fahrzeug (1) und dem Anbauelement (7) erfassbar ist, wobei bevorzugt vorgesehen ist, dass die energieübertragende Verbindung zwischen dem Fahrzeug (1) und dem Anbauelement (7) durch eine elektrische Verbindung gebildet ist, mittels der das Anbauelement (7) und/oder wenigstens eine Komponente des Anbauelements (7) mit elektrischer Energie versorgbar ist.

12. Vorrichtung nach einem der vorhergehenden Ansprüche, **dadurch gekennzeichnet, dass** das wenigstens eine Anbauelement (7) starr und/oder unbeweglich an dem Fahrzeug (1) und/oder an wenigstens einem fahrzeugseitigen Fixierelement (19) festlegbar ist.

13. Verfahren zur Unterstützung eines Fahrers eines Fahrzeugs, insbesondere eines Nutzfahrzeugs, zum Betreiben einer Vorrichtung nach einem der vorhergehenden Ansprüche wobei das Fahrzeug (1) wenigstens eine Fixiereinrichtung (19) aufweist, mittels der wenigstens ein Anbauelement (7) lösbar an dem Fahrzeug (1) festlegbar ist, wobei eine Festlegungs-Erfassungseinrichtung (27, 39) vorgesehen ist, mittels der selbsttätig erfasst und/oder erkannt wird, ob das wenigstens eine Anbauelement (7) an dem Fahrzeug (1) festgelegt ist, wobei eine signaltechnisch mit der Festlegungs-Erfassungseinrichtung (27, 39) verbundene Regel- und/oder Steuereinrichtung (41) vorgesehen ist, mittels der in Abhängigkeit von der Festlegung des Anbauelements (7) an dem Fahrzeug (1) eine Außenbeleuchtung (3, 5, 11, 15, 17) des Fahrzeugs (1) und/oder des wenigstens einen Anbauelements (7) selbsttätig verstellt und/oder eingestellt wird, **dadurch gekennzeichnet, dass** die Festlegungs-Erfassungseinrichtung wenigstens eine fahrzeugseitige Festlegungs-Erfassungseinrichtung (27) aufweist.

14. Fahrzeug, insbesondere Nutzfahrzeug, mit einer Vorrichtung nach einem der Ansprüche 1 bis 12 und/oder zur Durchführung eines Verfahrens nach Anspruch 13.

## Claims

1. Device for assisting a driver of a vehicle, in particular of a utility vehicle, wherein the vehicle (1) has at least one securing apparatus (19) by means of which at least one attachment (7) can be detachably fastened to the vehicle (1), wherein a fastening/sensing apparatus (27, 39) is provided by means of which it is possible to sense and/or detect automatically whether the at least one attachment (7) is fastened to the vehicle (1), wherein a closed-loop and/or open-loop control apparatus (41) is provided which is connected by signalling technology to the fastening/sensing apparatus (27, 39) and by means of which an exterior lighting system (3, 5, 11, 15, 17) of the vehicle (1) and/or of the at least one attachment (7) can be adjusted and/or set automatically as a function of the fastening of the attachment (7) to the vehicle (1), **characterized in that** the fastening/sensing apparatus has at least one vehicle-side fastening/sensing apparatus (27).

2. Device according to Claim 1, **characterized in that** in so far as fastening of the at least one attachment (7) to the vehicle (1) is not sensed by means of the fastening/sensing apparatus (25, 39), a basic lighting system (3; 5) of the vehicle exterior lighting system (3, 5, 15, 17) can be at least partially activated automatically by means of the closed-loop and/or open-loop control apparatus (41), and/or **in that**, in so far as fastening of the at least one attachment (7) to the vehicle (1) is sensed by means of the fastening/sensing apparatus (27, 39), a basic lighting system (3, 5) of the vehicle exterior lighting system (3, 5, 16, 17) can be at least partially deactivated automatically by means of the closed-loop and/or open-loop control apparatus (41).

3. Device according to Claim 1 or 2, **characterized in that** in so far as fastening of the at least one attachment (7) to the vehicle (1) is sensed by means of the fastening/sensing apparatus (27, 39), a working lighting system (15, 17) of the vehicle exterior lighting system (3, 5, 15, 17) can be activated automatically by means of the closed-loop and/or open-loop control apparatus (41), and/or **in that**, in so far as fastening of the at least one attachment (7) to the vehicle (1) is not sensed by means of the fastening/sensing apparatus (27, 39), a working lighting system (15, 17) of the vehicle exterior lighting system (3, 5, 15, 17) can be deactivated automatically by means of the closed-loop and/or open-loop control apparatus (41).

4. Device according to Claim 2 or 3, **characterized in that** the basic lighting system is formed by at least one vehicle-side basic front headlight (3) and/or at least one vehicle-side base travel direction indicator (5), and/or **in that** the working lighting system is formed by at least one vehicle-side working front headlight (17) and/or at least one vehicle-side working travel direction indicator (15).

5. Device according to one of the preceding claims, **characterized in that** in so far as fastening of the at least one attachment (7) to the vehicle (1) is sensed by means of the fastening/sensing apparatus (27, 39), the exterior lighting system (11) of the attachment (7) can be activated automatically by means of the closed-loop and/or open-loop control apparatus (41), and/or **in that** in so far as fastening of the at least one attachment (7) to the vehicle (1) is not sensed by means of the fastening/sensing apparatus (27, 39), the exterior lighting system (11) of the attachment (7) can be deactivated automatically by means of the closed-loop and/or open-loop control apparatus (41).

6. Device according to one of the preceding claims, **characterized in that** the at least one attachment (7) which is fastened to the vehicle is arranged at the front of the vehicle (1) when viewed in the longitudinal direction (x) of the vehicle, and/or **in that** the at least one attachment (7) which is fastened to the vehicle (1) is arranged centrally and/or laterally on the vehicle (1) when viewed in the transverse direction (y) of the vehicle.

7. Device according to one of the preceding claims, **characterized in that** the the fastening/sensing apparatus has at least one attachment-side fastening/sensing apparatus (39), wherein there is preferably provision that the at least one attachment-side fastening/sensing apparatus has at least one image-capturing apparatus (39), in particular a camera.

8. Device according to one of the preceding claims, **characterized in that** the vehicle-side fastening/sensing apparatus (27) has a force-sensing apparatus (29) by means of which the forces acting on the vehicle wheels (31) of the vehicle (1), in particular the weight forces acting on the vehicle wheels of the vehicle, can be sensed, wherein there is preferably provision that the force-sensing apparatus (29) has at least one pressure sensor for measuring an air pressure in air bellows of an air suspension system of the vehicle and/or at least one travel sensor for measuring a deflection of a suspension system of the vehicle and/or a tyre pressure-sensing apparatus, in particular at least one tyre pressure sensor, for sensing an air pressure of at least one vehicle wheel.

9. Device according to one of the preceding claims, **characterized in that** the vehicle-side fastening/sensing apparatus (27) has a position-sensing apparatus (33) by means of which the position and/or the orientation of the vehicle (1) relative to the underlying surface can be sensed, wherein there is preferably provision that the position-sensing apparatus (33) has at least one inclination sensor for measuring the inclination of the vehicle (1) relative to the underlying surface and/or at least one acceleration sensor for measuring the acceleration of the vehicle (1).

10. Device according to one of the preceding claims, **characterized in that** the vehicle-side fastening/sensing apparatus (27) has an object-sensing apparatus (35) by means of which objects located in the direct vicinity of the vehicle (1) can be sensed, wherein there is preferably provision that the object-sensing apparatus (35) has at least one ultrasonic sensor and/or at least one radar sensor and/or at least one light sensor and/or at least one laser sensor and/or at least one image-capturing apparatus, in particular a camera.

11. Device according to one of the preceding claims, **characterized in that** the attachment (7) can be connected in an energy-transmitting fashion to the vehicle (1), wherein the vehicle-side fastening/sensing apparatus (27) has a connection-sensing apparatus (37) by means of which an energy-transmitting connection between the vehicle (1) and the attachment (7) can be sensed, wherein there is preferably provision that the energy-transmitting connection between the vehicle (1) and the attachment (7) is formed by an electrical connection by means of which the attachment (7) and/or at least one component of the attachment (7) can be supplied with electrical energy.

12. Device according to one of the preceding claims, **characterized in that** the at least one attachment (7) can be fastened rigidly and/or non-movably to the vehicle (1) and/or to at least one vehicle-side securing element (19).

13. Method for assisting a driver of a vehicle, in particular of a utility vehicle, for operating a device according to one of the preceding claims, wherein the vehicle (1) has at least one securing apparatus (19) by means of which at least one attachment (7) can be detachably fastened to the vehicle (1), wherein a fastening/sensing apparatus (27, 39) is provided by means of which it is automatically sensed and/or detected whether the at least one attachment (7) is fastened to the vehicle (1), wherein a closed-loop and/or open-loop control apparatus (41) which is connected by signal technology to the fastening/sensing apparatus (27, 39) is provided, by means of which an exterior lighting system (3, 5, 11, 15, 17) of the vehicle (1) and/or of the at least one attachment (7) is automatically adjusted and/or set as a function of the fastening of the attachment (7) to the vehicle (1), **characterized in that** the fastening/sensing apparatus has at least one vehicle-side fastening/sensing apparatus (27).

14. Vehicle, in particular utility vehicle, having a device according to one of Claims 1 to 12 and/or for carrying out a method according to Claim 13.

## Revendications

1. Dispositif d'assistance à un conducteur d'un véhicule, en particulier d'un véhicule utilitaire, le véhicule (1) comprenant au moins un dispositif de fixation (19) au moyen duquel au moins un élément rapporté (7) peut être fixé de manière amovible au véhicule (1), un dispositif de détection de fixation (27, 39) étant prévu, au moyen duquel on peut détecter et/ou discerner automatiquement si ledit au moins un élément rapporté (7) est fixé au véhicule (1), un dispositif de régulation et/ou de commande (41) relié au dispositif de détection de fixation (27, 39) par transmission de signaux étant prévu, au moyen duquel, en fonction de la fixation de l'élément rapporté (7) au véhicule (1), un éclairage extérieur (3, 5, 11, 15, 17) du véhicule (1) et/ou dudit au moins un élément rapporté (7) peut être déplacé et/ou réglé automatiquement, **caractérisé en ce que** le dispositif de détection de fixation comprend au moins un dispositif de détection de fixation (27) côté véhicule.

2. Dispositif selon la revendication 1, **caractérisé en ce que** dès lors qu'aucune fixation dudit au moins un élément rapporté (7) au véhicule (1) n'est détectée au moyen du dispositif de détection de fixation (25, 39), un éclairage de base (3 ; 5) de l'éclairage extérieur de véhicule (3, 5, 15, 17) peut être activé automatiquement au moins partiellement au moyen du dispositif de régulation et/ou de commande (41), et/ou **en ce que** dès lors qu'une fixation dudit au moins un élément rapporté (7) au véhicule (1) est détectée au moyen du dispositif de détection de fixation (27, 39), un éclairage de base (3, 5) de l'éclairage extérieur de véhicule (3, 5, 16, 17) peut être désactivé automatiquement au moins partiellement au moyen du dispositif de régulation et/ou de commande (41).

3. Dispositif selon la revendication 1 ou 2, **caractérisé en ce que** dès lors qu'une fixation dudit au moins un élément rapporté (7) au véhicule (1) est détectée au moyen du dispositif de détection de fixation (27, 39), un éclairage de travail (15, 17) de l'éclairage extérieur de véhicule (3, 5, 15, 17) peut être activé automatiquement au moyen du dispositif de régulation et/ou de commande (41), et/ou **en ce que** dès lors qu'aucune fixation dudit au moins un élément rapporté (7) au véhicule (1) n'est détectée au moyen du dispositif de détection de fixation (27, 39), un éclairage de travail (15, 17) de l'éclairage extérieur de véhicule (3, 5, 15, 17) peut être désactivé automatiquement au moyen du dispositif de régulation et/ou de commande (41).

4. Dispositif selon la revendication 2 ou 3, **caractérisé en ce que** l'éclairage de base est formé par au moins un phare avant de base (3) côté véhicule et/ou au moins un indicateur de direction de base (5) côté véhicule, et/ou **en ce que** l'éclairage de travail est formé par au moins un phare avant de travail (17) côté véhicule et/ou au moins un indicateur de direction de travail (15) côté véhicule.

5. Dispositif selon l'une quelconque des revendications précédentes, **caractérisé en ce que** dès lors qu'une fixation dudit au moins un élément rapporté (7) au véhicule (1) est détectée au moyen du dispositif de détection de fixation (27, 39), l'éclairage extérieur (11) de l'élément rapporté (7) peut être activé automatiquement au moyen du dispositif de régulation et/ou de commande (41), et/ou **en ce que** dès lors qu'aucune fixation dudit au moins un élément rapporté (7) au véhicule (1) n'est détectée au moyen du dispositif de détection de fixation (27, 39), l'éclairage extérieur (11) de l'élément rapporté (7) peut être désactivé automatiquement au moyen du dispositif de régulation et/ou de commande (41).

6. Dispositif selon l'une quelconque des revendications précédentes, **caractérisé en ce que** ledit au moins un élément rapporté (7) fixé au véhicule est, vu dans la direction longitudinale du véhicule (x), disposé à l'avant sur le véhicule (1), et/ou **en ce que** ledit au moins un élément rapporté (7) fixé au véhicule (1) est, vu dans la direction transversale du véhicule (y), disposé centralement et/ou latéralement sur le véhicule (1).

7. Dispositif selon l'une quelconque des revendications précédentes, **caractérisé en ce que** le le dispositif de détection de fixation comprend au moins un dispositif de détection de fixation (39) côté élément rapporté, ledit au moins un dispositif de détection de fixation côté élément rapporté comprenant de préférence au moins un dispositif d'acquisition d'images (39), en particulier une caméra.

8. Dispositif selon l'une quelconque des revendications précédentes, **caractérisé en ce que** le dispositif de détection de fixation (27) côté véhicule comprend un dispositif de détection de force (29) au moyen duquel les forces agissant sur les roues (31) du véhicule (1), en particulier les poids agissant sur les roues du véhicule, peuvent être détectés, le dispositif de détection de force (29) comprenant de préférence au moins un capteur de pression servant à mesurer une pression d'air dans un soufflet à air d'une suspension pneumatique du véhicule et/ou au moins un capteur de déplacement servant à mesurer un débattement d'une suspension du véhicule et/ou un dispositif de détection de pression de pneu, en particulier au moins un capteur de pression de pneu, servant à détecter une pression d'air d'au moins une roue de véhicule.

9. Dispositif selon l'une quelconque des revendications précédentes, **caractérisé en ce que** le dispositif de détection de fixation (27) côté véhicule comprend un dispositif de détection de position (33) au moyen duquel la position et/ou l'orientation du véhicule (1) par rapport à la chaussée peuvent être détectées, le dispositif de détection de position (33) comprenant de préférence au moins un capteur d'inclinaison servant à mesurer l'inclinaison du véhicule (1) par rapport à la chaussée et/ou au moins un capteur d'accélération servant à mesurer l'accélération du véhicule (1).

10. Dispositif selon l'une quelconque des revendications précédentes, **caractérisé en ce que** le dispositif de détection de fixation (27) côté véhicule comprend un dispositif de détection d'objet (35) au moyen duquel des objets se trouvant à proximité immédiate du véhicule (1) peuvent être détectés, le dispositif de détection d'objet (35) comprenant de préférence au moins un capteur à ultrasons et/ou au moins un capteur radar et/ou au moins un capteur de lumière et/ou au moins un capteur laser et/ou au moins un dispositif d'acquisition d'images, en particulier une caméra.

11. Dispositif selon l'une quelconque des revendications précédentes, **caractérisé en ce que** l'élément rapporté (7) peut être relié au véhicule (1) de manière à transmettre de l'énergie, le dispositif de détection de fixation (27) côté véhicule comprenant un dispositif de détection de liaison (37) au moyen duquel une liaison de transmission d'énergie entre le véhicule (1) et l'élément rapporté (7) peut être détectée, la liaison de transmission d'énergie entre le véhicule (1) et l'élément rapporté (7) étant formée par une connexion électrique au moyen de laquelle l'élément rapporté (7) et/ou au moins un composant de l'élément rapporté (7) peuvent être alimentés en énergie électrique.

12. Dispositif selon l'une quelconque des revendications précédentes, **caractérisé en ce que** ledit au moins un élément rapporté (7) peut être fixé rigidement et/ou de manière non mobile au véhicule (1) et/ou à au moins un élément de fixation (19) côté véhicule.

13. Procédé d'assistance à un conducteur d'un véhicule, en particulier d'un véhicule utilitaire, permettant de faire fonctionner un dispositif selon l'une quelconque des revendications précédentes, le véhicule (1) comprenant au moins un dispositif de fixation (19) au moyen duquel au moins un élément rapporté (7) peut être fixé de manière amovible au véhicule (1), un dispositif de détection de fixation (27, 39) étant prévu, au moyen duquel on peut détecter et/ou discerner automatiquement si ledit au moins un élément rapporté (7) est fixé au véhicule (1), un dispositif de régulation et/ou de commande (41) relié au dispositif de détection de fixation (27, 39) par transmission de signaux étant prévu, au moyen duquel, en fonction de la fixation de l'élément rapporté (7) au véhicule (1), un éclairage extérieur (3, 5, 11, 15, 17) du véhicule (1) et/ou dudit au moins un élément rapporté (7) est déplacé et/ou réglé automatiquement, **caractérisé en ce que** le dispositif de détection de fixation comprend au moins un dispositif de détection de fixation (27) côté véhicule.

14. Véhicule, en particulier véhicule utilitaire, comprenant un dispositif selon l'une quelconque des revendications 1 à 12 et/ou permettant de mettre en oeuvre un procédé selon la revendication 13.
